# EUROPEAN PATENT SPECIFICATION

(11) **EP 2 457 863 B1**
(45) Date of publication and mention of the grant of the patent: **27.01.2016**
(21) Application number: 10193161.6
(22) Date of filing: 30.11.2010
(51) Int. Cl.: B66B 11/02, B66B 9/02

(54) **Lifting device**
Hebevorrichtung
Dispositif de levage

(43) Date of publication of application: 30.05.2012
(73) Proprietor: ThyssenKrupp Encasa S.r.l., 56121 Pisa (IT)
(72) Inventor: Sbrana, Fabio, 56023 Cascina Pisa (IT)
(74) Representative: Hoeger, Stellrecht & Partner Patentanwälte mbB

(56) References cited:
- EP-A1- 1 182 163
- EP-A2- 0 041 628
- DE-A1- 2 227 125
- JP-A- 2001 261 268
- US-A- 1 348 138
- US-B1- 6 591 945

## Description

The invention relates to a lifting device with a lift cage which has a passenger compartment and a cable winch arranged on the lift cage for the vertical displacement of the lift cage along a bearing cable, wherein the cable winch comprises a motor and a drive disk which can be caused to rotate by the motor and wherein the cable winch is arranged beneath the passenger compartment.

Lifting devices of this type are used for the vertical transport of persons and/or loads, in particular in cranes, masts or towers. For example, service personnel can be transported vertically in the tower of a wind power plant with the aid of these devices in order to reach the machine room of the wind power plant which is arranged at the upper end of the tower. For this purpose, the lifting device comprises a lift cage which has a passenger compartment. The service personnel can enter the passenger compartment. The lifting device is driven with the aid of a cable winch, typically a continuous winch, with which the bearing cable is guided around a drive disk which can be caused to rotate by a motor. The cable winch often has pressure members, with the aid of which the bearing cable is pressed against the drive disk in order to achieve the required friction between bearing cable and drive disk. The lift cage can be moved upwards and downwards on the bearing cable with the aid of the cable winch.

From DE 22 27 125 A1 a rescue cable elevator is known comprising a lift cage with a passenger compartment. A rotatable shaft is arranged beneath the passenger compartment. Two first rope drums are fixed on a first end of a shaft and two second rope drums are fixed on a second end of the shaft. A third rope drum is fixed on the shaft between the first and second rope drums. A hauling rope is wound up on the third rope drum. In case of emergency the lift cage can be positioned on the street below a window of a building. Four suspension ropes can be let down from the window to the street. With their first ends the suspension ropes can be fixed to the building near the window and the second ends of the suspension ropes can be fixed to one of the first or second rope drums. In order to move the lift cage up to the window, the hauling rope can be pulled off the third rope drum using an external winch on a lorry.

From US 6 591 945 B1 a self-propelled elevator is known comprising a lift cage which is elevated along guide rails in a hoistway by a winding rope, one end of which is fixed to a top portion on the hoistway and the other end portion of which is wound up on a winding drum sheave of a cable winch which is attached to a lower side of a bottom portion of the lift cage.

JP 2001-261268 A discloses a lifting device comprising a lift cage with a passenger compartment and a driving device which is arranged beneath the passenger compartment. The driving device comprises a drive disk and a motor as well as two deflecting rollers. The drive disk can be caused to rotate by the motor. A bearing cable is led over the drive disk and the deflecting rollers. By means of the bearing cable the lift cage is connected to a counterweight.

The traveling of the lift cage in a vertical direction entails a not inconsiderable consumption of energy. The object of the present invention is to reduce the energy consumption of the lifting device specified at the outset during travel of the lift cage.

This object is accomplished in accordance with the invention, in a lifting device of the generic type, in that the bearing cable is adapted to be directed to the cable winch in a vertical direction through the passenger compartment.

In the case of the lifting device according to the invention, the cable winch is arranged beneath the passenger compartment. This has the advantage that a solid support structure for the passenger compartment can be dispensed with since the passenger compartment need no longer absorb the force of the weight of the cable winch when the lift cage is located in a parking position, in which it sits on a standing surface. Since a solid support structure for the passenger compartment can be dispensed with, the weight of the lift cage can be reduced. This means, on the other hand, that the energy consumption of the lifting device when the lift cage is traveling can be kept low.

The bearing cable can be directed to the cable winch arranged beneath the passenger compartment in a vertical direction through the passenger compartment. As a result, additional deflecting rollers can be dispensed with. This makes an additional reduction in the weight of the lift cage possible. In addition, the direct guidance of the bearing cable to the cable winch without the use of any deflecting rollers which are mounted on the lift cage for rotation allows the number of movable parts of the lifting device to be reduced. This makes the lifting device less susceptible to breakdowns and increases its service life.

It is of advantage when a speed limiter is also arranged beneath the passenger compartment and a speed limiter cable can be directed to this speed limiter in a vertical direction through the passenger compartment. The speed limiter normally forms a safety device, with the aid of which it is ensured that the lift cage will be braked abruptly when the speed of the lift cage increases inadmissibly. Speed limiters of this type are known per se to the person skilled in the art. The arrangement of the speed limiter beneath the passenger compartment makes an additional reduction in the weight of the passenger compartment possible since it does not experience any excessive mechanical load even in the case of a breakdown and can, therefore, be designed in a very weight-saving manner.

The speed limiter cable which interacts with the speed limiter in a known manner is also directed to the speed limiter in a vertical direction through the passenger compartment and so additional deflecting rollers can also be dispensed with for the speed limiter cable.

It is of advantage when a cable protection device is arranged in the passenger compartment and surrounds the bearing cable and/or the speed limiter cable. It may be ensured by means of the cable protection device that a person who enters the passenger compartment cannot come into contact with the bearing cable or the speed limiter cable even though the cable is guided through the passenger compartment in a vertical direction.

The cable protection device extends, in one advantageous embodiment of the invention, from a top wall as far as a bottom wall of the passenger compartment.

The cable protection device preferably has at least one movable section which can be moved back and forth between a protection position surrounding the bearing cable and/or the speed limiter cable and a release position releasing the bearing cable and/or the speed limiter cable. During normal working use of the lifting device, the at least one movable section of the cable protection device is in its protection position, in which it surrounds the bearing cable and/or the speed limiter cable in circumferential direction and, as a result, ensures that a person standing in the passenger compartment cannot come into contact with the cable. If the bearing cable or the speed limiter cable are intended to be checked, however, for possible damage, the at least one movable section can be moved into its release position, in which the bearing cable or the speed limiter cable are directly accessible within the passenger compartment so that a person can observe the bearing cable or the speed limiter cable during travel of the lift cage. The person can, in this respect, remain in their position in the passenger compartment and need not, therefore, leave the passenger compartment for the purpose of inspecting the bearing cable or the speed limiter cable.

In order to be able to check the bearing cable and/or the speed limiter cable during travel of the lift cage practically over their entire length, it is favorable when a movable section of the cable protection device is arranged directly adjacent to the bottom wall of the passenger compartment. With such a configuration, the bearing cable and/or the speed limiter cable can be checked directly at the bottom wall of the passenger compartment. If the lift cage is moved vertically upwards proceeding from a position at the lower end of the bearing cable, wherein the movable section of the cable protection device which is arranged adjacent to the bottom wall of the passenger compartment is in its release position, the bearing cable and the speed limiter cable, respectively, can be checked practically over their entire length at the bottom wall of the passenger compartment, wherein the service personnel can remain in position within the passenger compartment.

The cable protection device has, in one preferred development of the invention, at least one protective tube which extends from the bottom wall as far as the top wall of the passenger compartment. The bearing cable or the speed limiter cable can be guided through the protective tube in a longitudinal direction and since the protective tube extends from the bottom wall as far as the top wall of the passenger compartment, it is possible to reliably avoid any contact being made with the bearing cable or the speed limiter cable by a person in the passenger compartment.

The at least one protective tube preferably has at least one movable tube section which can be displaced relative to a stationary tube section in longitudinal direction of the protective tube. The displaceability of the movable tube section makes it possible in a constructionally simple manner to move the movable tube section back and forth between a protection position and a release position. In the protection position, the movable tube section surrounds the bearing cable or speed limiter cable guided through the protective tube and in the release position the bearing cable or the speed limiter cable are accessible for checking.

It has proven to be favorable when a movable tube section forms the end area of the protective tube facing the bottom wall of the passenger compartment. If the movable tube section is moved into its release position, the bearing cable guided through the protective tube or the speed limiter cable guided through the protective tube is accessible at the bottom wall of the passenger compartment for checking.

A flange is advantageously secured to the movable tube section of the protective tube and this can be releasably connected, in particular screwed, to the bottom wall of the passenger compartment.

As already mentioned, the cable protection device extends in one advantageous embodiment from the bottom wall as far as the top wall of the passenger compartment. With such a configuration, it is favorable when the passenger compartment has a rear wall and the cable protection device is arranged at a distance from and parallel to the rear wall, wherein several bars extend between the rear wall and the cable protection device and they form a ladder in their entirety. As a result of the bars, the cable protection device can, on the one hand, be secured on the rear wall within the passenger compartment. As a result, the cable protection device has a high mechanical load capacity, wherein it can, in particular, also safely withstand forces which act horizontally. On the other hand, the bars, which respectively extend between the rear wall of the passenger compartment and the cable protection device, enable a ladder to be formed in a constructionally simple manner and so a skylight favorably arranged in the top wall of the passenger compartment can comfortably be reached by a person. This is of advantage when, for example in wind power plants, a room above the upper end of the bearing cable is intended to be accessible. In such a case, the lift cage can take up its uppermost position and a person can climb out of the lift cage in a vertical direction via the ladder and the skylight. In this way, a work platform of the wind power plant, which is arranged above the upper end of the bearing cable, can, for example, be reached.

The ladder which is arranged in the passenger compartment in the area of the rear wall also offers the possibility of securing work utensils brought along by a person to the ladder.

The rear wall of the passenger compartment preferably has two rear wall sections, between which the bars of the ladder are secured. For the purpose of securing the bars between the two rear wall sections, a holding part can be used which extends between the two rear wall sections. The holding part gives the rear wall additional mechanical stability.

In one particularly preferred development of the lifting device according to the invention, the lift cage has a drive chamber beneath the passenger compartment, in which the cable winch as well as a control device associated with the cable winch are arranged.

The drive chamber is favorably accessible via closable openings in the bottom wall of the passenger compartment. This allows a person entering the passenger compartment to store any tool they have brought along in the drive chamber.

The drive chamber favorably comprises a dividing wall which extends in a vertical direction between a bottom wall of the lift cage and a bottom wall of the passenger compartment and on which the cable winch is held. The provision of the dividing wall, which divides the working space into two subchambers, gives the lift cage a particularly high mechanical stability. The bottom wall of the passenger compartment, which has to bear the weight of a person to be transported, is supported by the bottom wall of the passenger compartment by means of the dividing wall. The cable winch can be secured to the dividing wall.

A speed limiter of the lifting device is also favorably positioned in the drive chamber. In this respect, it is of advantage when the speed limiter is held on the side of the dividing wall of the drive chamber which faces away from the cable winch.

As already mentioned, the weight of the lift cage can be kept low as a result of the positioning of the cable winch beneath the passenger compartment since it need not have any special bearing structure. In one advantageous embodiment, the passenger compartment is designed to be frameless and formed by panels which are connected to one another. The panels can be produced from a flat material, in particular from sheet metal.

It is favorable when at least one panel is, in sections, of a transparent configuration. For example, it may be provided for a window to be arranged in at least one panel.

The following description of one preferred embodiment of the invention serves to explain the invention in greater detail in conjunction with the drawings. These show:
- Figure 1:: a perspective illustration of a lifting device according to the invention;
- Figure 2:: a perspective illustration of the lifting device from Figure 1, wherein front panels of the lifting device have been removed;
- Figure 3:: an enlarged illustration of a lower area of the lifting device from Figure 1, wherein a movable section of a cable protection device is in a protection position, and
- Figure 4:: an enlarged illustration of the lower area of the lifting device according to Figure 3, wherein the movable section of the cable protection device is in a release position.

A lifting device according to the invention, which is designated altogether with the reference numeral 10, is illustrated schematically in the drawings. It comprises a lift cage 12 which is essentially of a parallelepiped design in the embodiment illustrated and has a rear wall 14, an upper and a lower end wall 16 and 17, respectively, as well as two side walls 18, 20 located opposite one another. In addition, the lift cage 12 comprises a top wall 22 as well as a first bottom wall 24 and a second bottom wall 26. Above the first bottom wall 24, the lift cage 12 defines a passenger compartment 28 which can be entered by persons to be transported via a door opening 30 in the upper end wall 16. The door opening 30 can be closed by a door which can be moved parallel to the upper end wall 16 and is not illustrated in the drawings. The persons entering the passenger compartment 28 stand on the first bottom wall 24 which forms the floor of the passenger compartment 28.

Between the first bottom wall 24 and the second bottom wall 26 the lift cage 12 defines a drive chamber 32 which is divided into a first subchamber 36 and a second subchamber 38 by a dividing wall 34 which is aligned at right angles to the bottom walls 24, 26 and at right angles to the rear wall 14. The dividing wall 34 extends at right angles to the rear wall 14 only over a section of the drive chamber 32 and so a front area of the drive chamber 32 which is arranged adjacent to the lower end wall 17 between the two side walls 18 and 20 extends over the entire width of the lift cage 12 without being subdivided by the dividing wall 34.

The first bottom wall 24 has three floor openings 40, 42, 44 which can each be closed by a cover 46, 48 and 50, respectively. The first subchamber 36 of the drive chamber 32 is accessible from the passenger compartment 28 via the first floor opening 40. The second floor opening 42 makes access from the passenger compartment 28 to the second subchamber 38 possible and the third floor opening 34 makes access from the passenger compartment 28 to the front area of the drive chamber 32 adjacent to the lower end wall 17 possible.

A speed limiter 52 is held on the side of the dividing wall 34 facing the first subchamber 32 and a cable winch in the form of a continuous winch 54 is held on the side of the dividing wall 34 facing the second subchamber 38. As is customary, the continuous winch 54 comprises a drive motor 56 which, via a gear 58, drives a drive disk which is not illustrated in the drawings and is arranged in a drive disk housing 60. The drive disk housing 60 is arranged on the dividing wall 34.

The control of the continuous winch 54 is brought about by means of an electric control device 62 which is fixed in position on the rear wall 14 of the lift cage 12 in the area of the first subchamber 36.

A cable protection device 64 is arranged in the passenger compartment 28 and this extends from the first bottom wall 24 as far as the top wall 22. It has a first protective tube 66 and a second protective tube 68 which are arranged parallel to and at a distance from one another. The two protective tubes 66, 68 are secured to a profiled holding means 70 which is held on the rear wall 14 by means of several bars 72, 73, 74, 75. The bars 72, 73, 74, 75 are of an identical design and held between two rear wall sections 78, 80. In combination with the two protective tubes 66, 68 and the profiled holding means 70, the bars 72, 73, 74,75 form a ladder 82 which is vertically aligned and extends from the first bottom wall 24 as far as the top wall 22 of the passenger compartment 28.

A skylight 84 is arranged in the top wall 22 and is covered by a releasable transparent cover 86. A person can leave the passenger compartment 28 in a vertical direction via the ladder 82 and the skylight 84.

The first protective tube 66 has a first stationary tube section 88 and a first movable tube section 90. The first movable tube section 90 forms the end area of the first protective tube 66 which is immediately adjacent to the first bottom wall 24 and the first stationary tube section 88 extends as far as the first movable tube section 90 proceeding from the top wall 22.

The second protective tube 68 comprises a second stationary tube section 92 and a second movable tube section 94. The second movable tube section 94 forms the end area of the second protective tube 68 which is immediately adjacent to the first bottom wall 24 and the second stationary tube section 92 extends from the top wall 22 as far as the second movable tube section 94.

The first movable tube section 90 and the second movable tube section 94 are rigidly connected to one another via a common flange 96. The flange 96 is releasably connected to the first bottom wall 24. In the embodiment illustrated, the flange 96 is screwed to the first bottom wall 24.

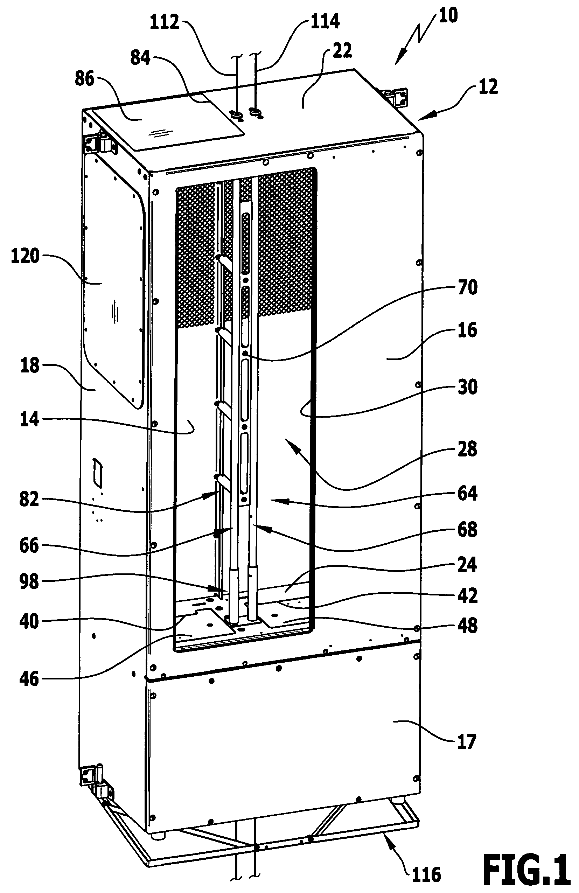

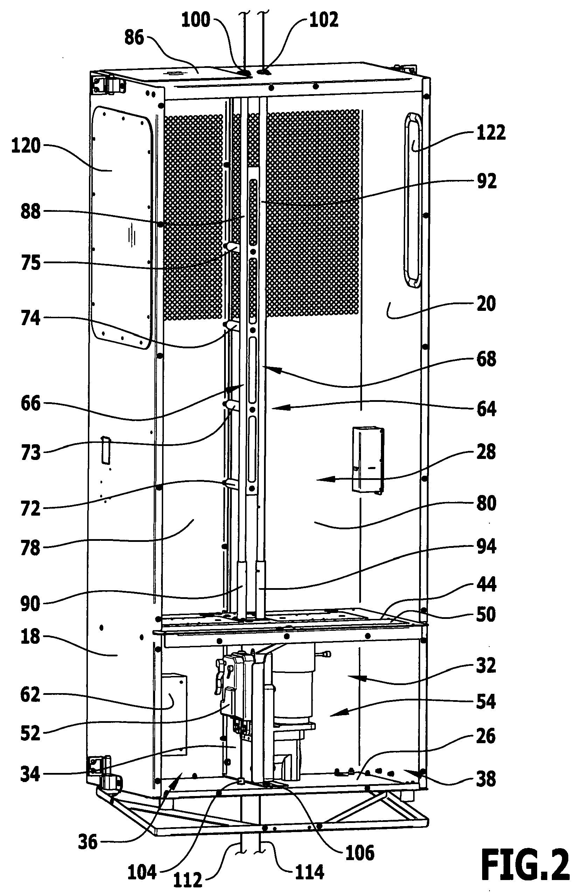

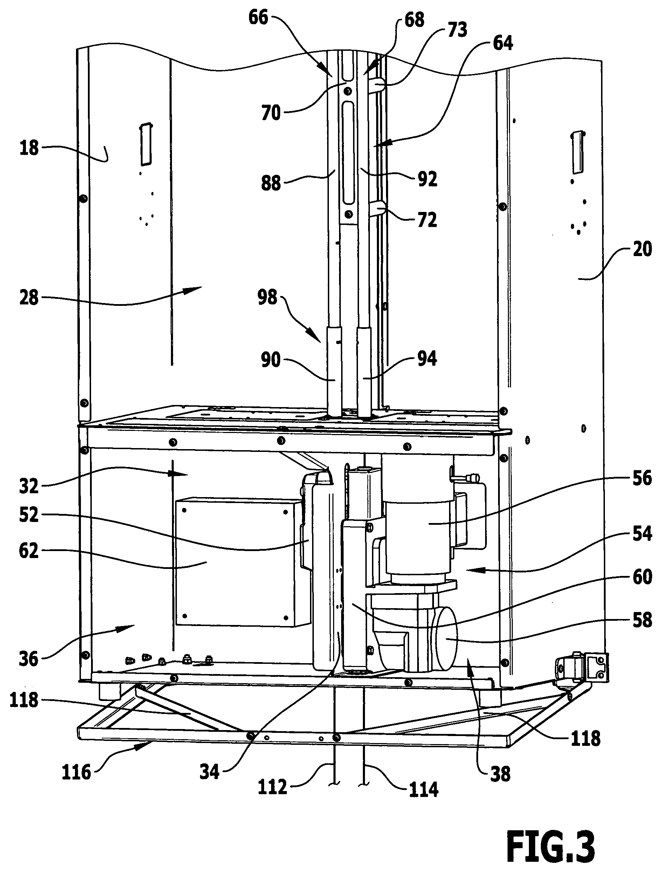

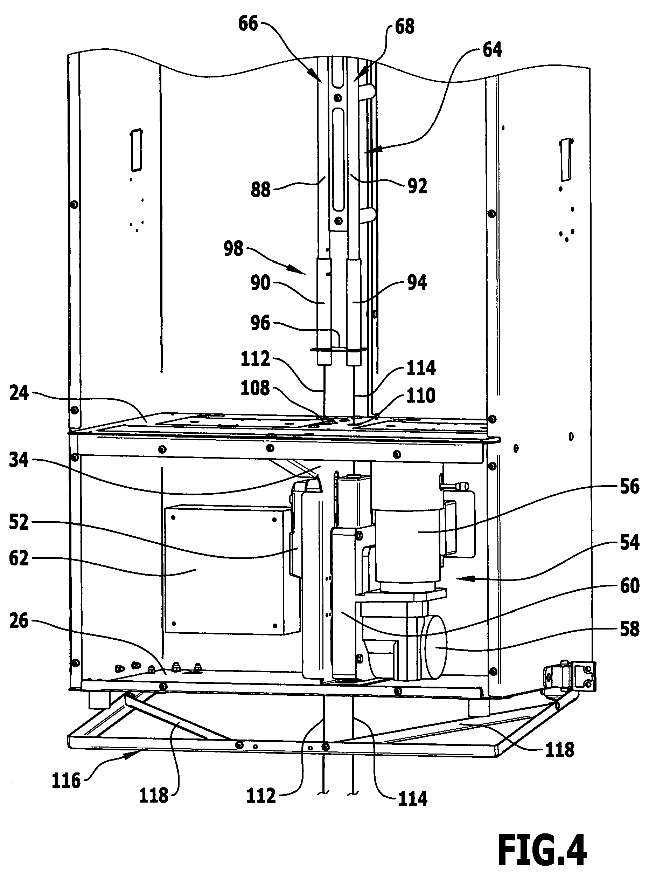

In combination with the flange 96, the two movable tube sections 90 and 94 form a section 98 of the cable protection device 64 which can be moved in a vertical direction. It can be displaced back and forth between a protection position, which is illustrated in Figures 1, 2 and 3 and in which the flange 96 abuts on the first bottom wall 24, and a release position which is illustrated in Figure 4 and in which the flange 96 and the movable tube sections 90, 94 are at a distance from the first bottom wall 24. During the transition from the protection position into the release position the end areas of the stationary tube sections 88 and 92 facing the first bottom wall 24 dip into the movable tube sections 90 and 94, respectively.

In alignment with the first protective tube 66 the top wall 24 has a first top wall passage 100 and in alignment with the second protective tube 68 the top wall 22 has a second top wall passage 102. The second bottom wall 26 comprises, in a corresponding manner, a first bottom wall passage 104 in alignment with the first protective tube 66 and the second bottom wall 26 comprises a second bottom wall passage 106 in alignment with the second protective tube 68.

The first bottom wall 24 has a first passage 108 between the first floor opening 40 and the second floor opening 42 which is in alignment with the first protective tube 66 and in the protection position of the movable section 98 accommodates an end area of the first movable tube section 90 and the first bottom wall 24 has a second passage 110 which is in alignment with the second protective tube 68 and in the protection position of the movable section 98 accommodates an end area of the second movable tube section 94.

A speed limiter cable 112 can be guided through the first top wall passage 100, the first protective tube 66, the first passage 108 and the first bottom wall passage 104 and this interacts with the speed limiter 52 in the known manner. In a corresponding way, a bearing cable 114 can be guided through the second top wall passage 102, the second protective tube 68, the second passage 110 and the second bottom wall passage 106 and this interacts with the continuous winch 54 in the known manner in order to move the lift cage 12 in a vertical direction.

The bearing cable 114 can, therefore, be directed to the continuous winch 54 arranged beneath the passenger compartment 28 in a vertical direction through the passenger compartment 28, wherein it is protected within the passenger compartment 28 from any contact with a person in the passenger compartment 28 by means of the second protective tube 68. In a corresponding manner, the speed limiter cable 112 can be directed to the speed limiter 52 in a vertical direction through the passenger compartment 28, wherein it is protected within the passenger compartment 28 from any contact with a person in the passenger compartment 28 by means of the first protective tube 66. The bearing cable 114 is guided to the continuous winch 54 without the use of deflecting rollers and, in a corresponding way, the speed limiter cable 112 is guided to the speed limiter 52 without the use of deflecting rollers.

The arrangement of the continuous winch 54 beneath the passenger compartment 28 in the drive chamber 32 enables the passenger compartment 28 to be designed in a frameless manner, i.e. a reinforcing frame for the passenger compartment 28 can be dispensed with. In a corresponding way, a reinforcing frame for the drive chamber 32 can also be dispensed with. On the contrary, a frame 116 for increasing the rigidity of the lift cage 12, with several struts 118 which increase the mechanical stability of the lift cage 12, is merely arranged beneath the drive chamber 32.

The rear wall sections 78, 80 of the rear wall 14 are, in the same way as the end walls 16, 17, the side walls 18, 20, the top wall 22 and the two bottom walls 24, 26, designed as panels and manufactured from a flat material. In the embodiment illustrated, they are designed as sheet metal parts which are screwed to one another. The side walls 18, 20 each have a window 120, 122 in their end areas facing the top wall 22 and also the cover 86 of the skylight 84 is manufactured from a transparent material, for example a plastic material.

The weight of the lift cage 12 can be kept low as a result of the positioning of the continuous winch 54 beneath the passenger compartment 28. This enables the energy consumption of the lifting device 10 to be kept low. The lifting device 10 is also characterized by a long service life since it has only a relatively small number of movable parts.

As already mentioned, service personnel can be transported, for example, in the tower of a wind power plant by means of the lift cage 12. The cable protection device 64 ensures that the service personnel cannot come into contact unintentionally with the speed limiter cable 112 and/or the bearing cable 114 while the lift cage 12 is moving relative to these cables. For this purpose, the movable section 98 of the cable protection device takes up its protection position, in which the flange 96 is screwed to the first bottom wall 24. If the speed limiter cable 112 and/or the bearing cable 114 are intended to be inspected, the movable section 98 of the cable protection device 64 can, for this purpose, be moved into its release position, in which the movable tube sections 90 and 94, like the flange 96, are at a distance from the first bottom wall 24. This enables the speed limiter cable 112 and the bearing cable 114 to be checked while the lift cage 12 is traveling since they are directly accessible for inspection in the release position of the movable section 98. Since the movable section 98 directly adjoins the first bottom wall 24 within the passenger compartment 28, the speed limiter cable 112 and the bearing cable 114 can be checked practically over their entire length during travel of the lift cage 12 from its lowermost position as far as its uppermost position without a person needing to leave the passenger compartment 28 for this purpose.

## Claims

1. Lifting device comprising a lift cage (12) with a passenger compartment (28) and a cable winch (54) arranged on the lift cage (12) for the vertical displacement of the lift cage (12) along a bearing cable (114), wherein the cable winch (54) comprises a motor (56) and a drive disk which can be caused to rotate by the motor, and wherein the cable winch (54) is arranged beneath the passenger compartment (28), **characterized in that** the bearing cable (114) is adapted to be directed to the cable winch (54) in a vertical direction through the passenger compartment (28).

2. Lifting device as defined in claim 1, **characterized in that** a speed limiter (52) is arranged beneath the passenger compartment (28), a speed limiter cable (112) being adapted to be directed to said speed limiter in a vertical direction through the passenger compartment (28).

3. Lifting device as defined in claim 1 or 2, **characterized in that** a cable protection device (64) is arranged in the passenger compartment (28) and surrounds the bearing cable (114) and/or the speed limiter cable (112).

4. Lifting device as defined in claim 3, **characterized in that** the cable protection device (64) extends from a top wall (22) as far as a bottom wall (24) of the passenger compartment (28).

5. Lifting device as defined in claim 3 or 4, **characterized in that** the cable protection device (64) has at least one movable section (98) movable back and forth between a protection position surrounding the bearing cable (114) and/or the speed limiter cable (112) and a release position releasing the bearing cable (114) and/or the speed limiter cable (112).

6. Lifting device as defined in claim 5, **characterized in that** a movable section (98) of the cable protection device (64) is arranged directly adjacent to the bottom wall (24) of the passenger compartment (28).

7. Lifting device as defined in any one of claims 3 to 6, **characterized in that** the cable protection device (64) has at least one protective tube (66, 68) extending from the bottom wall (24) as far as the top wall (22) of the passenger compartment (28).

8. Lifting device as defined in claim 7, **characterized in that** the at least one protective tube (66, 68) has at least one movable tube section (90, 94) displaceable relative to a stationary tube section (88, 92) in longitudinal direction of the protective tube (66, 68).

9. Lifting device as defined in any one of claims 3 to 8, **characterized in that** the passenger compartment (28) has a rear wall (14) and the cable protection device (68) is arranged at a distance from and parallel to the rear wall (14), wherein several bars (72, 73, 74, 75) extend between the rear wall (14) and the cable protection device (64) and form a ladder (82) in their entirety.

10. Lifting device as defined in claim 9, **characterized in that** the rear wall (14) has two rear wall sections (78, 80), the bars (72, 73, 74, 75) being secured between said rear wall sections.

11. Lifting device as defined in any one of the preceding claims, **characterized in that** the lift cage (12) has a drive chamber (32) beneath the passenger compartment (28), the cable winch (54) as well as a control device (62) associated with the cable winch (54) being arranged in said chamber.

12. Lifting device as defined in claim 11, **characterized in that** the drive chamber (32) has a dividing wall (34) extending in a vertical direction between the bottom wall (26) of the drive chamber (32) and the bottom wall (24) of the passenger compartment (28), the cable winch (54) being held on said dividing wall.

13. Lifting device as defined in claim 12, **characterized in that** a speed limiter (52) is held on the side of the dividing wall (34) facing away from the cable winch (54).

14. Lifting device as defined in any one of the preceding claims, **characterized in that** the passenger compartment (28) is designed to be frameless and formed by panels connected to one another.

## Patentansprüche

1. Hebevorrichtung, umfassend einen Fahrkorb (12) mit einem Fahrgastabteil (28) und einer an dem Fahrkorb (12) angeordneten Seilwinde (54) für das vertikale Verlagern des Fahrkorbs (12) entlang eines Tragseils (114), wobei die Seilwinde (54) einen Motor (56) und eine durch den Motor in Rotation versetzbare Treibscheibe umfasst und wobei die Seilwinde (54) unterhalb des Fahrgastabteils (28) angeordnet ist, **dadurch gekennzeichnet, dass** das Tragseil (114) in einer vertikalen Richtung durch das Fahrgastabteil (28) hindurch der Seilwinde (54) zuführbar ist.

2. Hebevorrichtung nach Anspruch 1, **dadurch gekennzeichnet, dass** ein Geschwindigkeitsbegrenzer (52) unterhalb des Fahrgastabteils (28) angeordnet ist, wobei ein Geschwindigkeitsbegrenzerseil (112) in einer vertikalen Richtung durch das Fahrgastabteil (28) hindurch dem Geschwindigkeitsbegrenzer zuführbar ist.

3. Hebevorrichtung nach Anspruch 1 oder 2, **dadurch gekennzeichnet, dass** eine Seilschutzvorrichtung (64) in dem Fahrgastabteil (28) angeordnet ist und das Tragseil (114) und/oder das Geschwindigkeitsbegrenzerseil (112) umgibt.

4. Hebevorrichtung nach Anspruch 3, **dadurch gekennzeichnet, dass** sich die Seilschutzvorrichtung (64) von einer Deckenwand (22) bis zu einer Bodenwand (24) des Fahrgastabteils (28) erstreckt.

5. Hebevorrichtung nach Anspruch 3 oder 4, **dadurch gekennzeichnet, dass** die Seilschutzvorrichtung (64) mindestens einen beweglichen Abschnitt (98) aufweist, welcher zwischen einer das Tragseil (114) und/oder das Geschwindigkeitsbegrenzerseil (112) umgebenden Schutzposition und einer das Tragseil (114) und/oder das Geschwindigkeitsbegrenzerseil (112) freigebenden Freigabeposition hin und her bewegbar ist.

6. Hebevorrichtung nach Anspruch 5, **dadurch gekennzeichnet, dass** ein bewegbarer Abschnitt (98) der Seilschutzvorrichtung (64) unmittelbar benachbart zu der Bodenwand (24) des Fahrgastabteils (28) angeordnet ist.

7. Hebevorrichtung nach einem der Ansprüche 3 bis 6, **dadurch gekennzeichnet, dass** die Seilschutzvorrichtung (64) mindestens ein Schutzrohr (66, 68) aufweist, welches sich von der Bodenwand (24) bis zu der Deckenwand (22) des Fahrgastabteils (28) erstreckt.

8. Hebevorrichtung nach Anspruch 7, **dadurch gekennzeichnet, dass** das mindestens eine Schutzrohr (66, 68) mindestens einen bewegbaren Rohrabschnitt (90, 94) aufweist, welcher relativ zu einem feststehenden Rohrabschnitt (88, 92) in Längsrichtung des Schutzrohrs (66, 68) verschiebbar ist.

9. Hebevorrichtung nach einem der Ansprüche 3 bis 8, **dadurch gekennzeichnet, dass** das Fahrgastabteil (28) eine Rückwand (14) aufweist und dass die Seilschutzvorrichtung (68) im Abstand von der Rückwand (14) und parallel zu dieser angeordnet ist, wobei sich mehrere Stangen (72, 73, 74, 75) zwischen der Rückwand (14) und der Seilschutzvorrichtung (64) erstrecken und in ihrer Gesamtheit eine Leiter (82) bilden.

10. Hebevorrichtung nach Anspruch 9, **dadurch gekennzeichnet, dass** die Rückwand (14) zwei Rückwandabschnitte (78, 80) aufweist, wobei die Stangen (72, 73, 74, 75) zwischen den Rückwandabschnitten festgelegt sind.

11. Hebevorrichtung nach einem der voranstehenden Ansprüche, **dadurch gekennzeichnet, dass** der Fahrkorb (12) eine Antriebskammer (32) unterhalb des Fahrgastabteils (28) aufweist, wobei die Seilwinde (54) sowie eine der Seilwinde (54) zugeordnete Steuervorrichtung (62) in der Kammer angeordnet sind.

12. Hebevorrichtung nach Anspruch 11, **dadurch gekennzeichnet, dass** die Antriebskammer (32) eine Trennwand (34) aufweist, welche sich in einer vertikalen Richtung zwischen der Bodenwand (26) der Antriebskammer (32) und der Bodenwand (24) des Fahrgastabteils (28) erstreckt, wobei die Seilwinde (54) an der Trennwand gehalten ist.

13. Hebevorrichtung nach Anspruch 12, **dadurch gekennzeichnet, dass** ein Geschwindigkeitsbegrenzer (52) an der der Seilwinde (54) abgewandten Seite der Trennwand (34) gehalten ist.

14. Hebevorrichtung nach einem der voranstehenden Ansprüche, **dadurch gekennzeichnet, dass** das Fahrgastabteil (28) so ausgebildet ist, dass es rahmenlos ist und durch miteinander verbundene Panelen gebildet ist.

## Revendications

1. Dispositif de levage comprenant une cabine d'ascenseur (12) avec un compartiment passager (28) et un treuil de câble (54) agencé sur la cabine d'ascenseur (12) pour le déplacement vertical de la cabine d'ascenseur (12) le long d'un câble de support (114), dans lequel le treuil de câble (54) comprend un moteur (56) et un disque d'entraînement qui peut être mis en rotation par le moteur, et dans lequel le treuil de câble (54) est agencé sous le compartiment passager (28), **caractérisé en ce que** le câble de support (114) est adapté pour être dirigé vers le treuil de câble (54) dans une direction verticale à travers le compartiment passager (28).

2. Dispositif de levage selon la revendication 1, **caractérisé en ce qu'**un limiteur de vitesse (52) est agencé au-dessous du compartiment passager (28), un câble de limiteur de vitesse (112) étant adapté pour être dirigé vers ledit limiteur de vitesse dans une direction verticale à travers le compartiment passager (28).

3. Dispositif de levage selon la revendication 1 ou 2, **caractérisé en ce qu'**un dispositif de protection de câble (64) est agencé dans le compartiment passager (28) et entoure le câble de support (114) et/ou le câble de limiteur de vitesse (112).

4. Dispositif de levage selon la revendication 3, **caractérisé en ce que** le dispositif de protection de câble (64) s'étend depuis une paroi supérieure (22) jusqu'à une paroi inférieure (24) du compartiment passager (28).

5. Dispositif de levage selon la revendication 3 ou 4, **caractérisé en ce que** le dispositif de protection de câble (64) comporte au moins une section mobile (98) pouvant aller et venir entre une position de protection entourant le câble de support (114) et/ou le câble de limiteur de vitesse (112) et une position de libération libérant le câble de support (114) et/ou le câble de limiteur de vitesse (112).

6. Dispositif de levage selon la revendication 5, **caractérisé en ce qu'**une section mobile (98) du dispositif de protection de câble (64) est agencée directement adjacente à la paroi inférieure (24) du compartiment passager (28).

7. Dispositif de levage selon l'une quelconque des revendications 3 à 6, **caractérisé en ce que** le dispositif de protection de câble (64) comporte au moins un tube protecteur (66, 68) s'étendant depuis la paroi inférieure (24) jusqu'à la paroi supérieure (22) du compartiment passager (28).

8. Dispositif de levage selon la revendication 7, **caractérisé en ce que** l'au moins un tube protecteur (66, 68) comporte au moins une section de tube mobile (90, 94) pouvant être déplacée relativement à une section de tube fixe (88, 92) dans une direction longitudinale du tube protecteur (66, 68).

9. Dispositif de levage selon l'une quelconque des revendications 3 à 8, **caractérisé en ce que** le compartiment passager (28) comporte une paroi arrière (14) et le dispositif de protection de câble (68) est agencé à une distance de et parallèle à la paroi arrière (14), dans lequel plusieurs barres (72, 73, 74, 75) s'étendent entre la paroi arrière (14) et le dispositif de protection de câble (64) et forment un escalier (82) dans leur totalité.

10. Dispositif de levage selon la revendication 9, **caractérisé en ce que** la paroi arrière (14) comporte deux sections de paroi arrière (78, 80), les barres (72, 73, 74, 75) étant fixées entre lesdites sections de paroi arrière.

11. Dispositif de levage selon l'une quelconque des revendications précédentes, **caractérisé en ce que** la cabine d'ascenseur (12) comporte une chambre d'entraînement (32) au-dessous du compartiment passager (28), le treuil de câble (54) ainsi qu'un dispositif de commande (62) associé au treuil de câble (54) étant agencés dans ladite chambre.

12. Dispositif de levage selon la revendication 11, **caractérisé en ce que** la chambre d'entraînement (32) comporte une paroi de séparation (34) s'étendant dans une direction verticale entre la paroi inférieure (26) de la chambre d'entraînement (32) et la paroi inférieure (24) du compartiment passager (28), le treuil de câble (54) étant maintenu sur ladite paroi de séparation.

13. Dispositif de levage selon la revendication 12, **caractérisé en ce qu'**un limiteur de vitesse (52) est maintenu sur le côté de la paroi de division (34) opposée au treuil de câble (54).

14. Dispositif de levage selon l'une quelconque des revendications précédentes, **caractérisé en ce que** le compartiment passager (28) est conçu pour être sans structure et formé par des panneaux connectés les uns aux autres.
